# EUROPEAN PATENT SPECIFICATION

(11) **EP 2 052 706 B1**
(45) Date of publication and mention of the grant of the patent: **15.06.2011**
(21) Application number: 08155651.6
(22) Date of filing: 05.05.2008
(51) Int. Cl.: A61G 3/00, B60N 2/01

(54) **Medical vehicle specifically for transporting passengers to be submitted to non-urgent medical treatment**
Krankentransportfahrzeug, im Besonderen für den Transport von Passagieren zu nicht dringenden medizinische Behandlungen
Véhicule médical, en particulier pour le transport de passagers devant subir un traitement médical non urgent

(30) Priority: 04.05.2007 IT BO20070327
(43) Date of publication of application: 29.04.2009
(73) Proprietor: Fondazione Catis, 40129 Bologna (IT); E.D.M. Engineering Development & Marketing S.r.l., 47011 Castrocaro Terme e Terra del Sole (FC) (IT)
(72) Inventor: Dragotta, Francesco, 40042, Lizzano In Belvedere (Bologna) (IT); Azzellini, Cosimo, 44100, Chiesuol Del Fosso (Ferrara) (IT); Castellucci, Carlo, 40011, Anzola Emilia (Bologna) (IT); Treossi, Daniele, 47011, Castrocaro Terme (Forli'-Cesena) (IT)
(74) Representative: Fanzini, Valeriano

(56) References cited:
- WO-A-98/51532
- WO-A-2007/082040
- WO-A-2008/063871
- CN-Y- 201 161 071
- DE-B- 2 000 967
- GB-A- 2 427 176
- GB-A- 2 447 503
- KR-B1- 100 337 815
- US-A- 3 792 468
- US-A1- 2003 058 112
- US-A1- 2003 143 052
- US-A1- 2006 192 050

## Description

The present invention relates to a vehicle, in particular of the medical type, specifically for transporting passengers.

The vehicle is intended, in particular, for transporting passengers who will undergo non-urgent medical care or treatment, for example a periodic therapy, a diagnostic test or other procedure.

GB 2427176 discloses such a vehicle.

For transporting passengers who will undergo care - in particular for transporting people from their homes to treatment or test centres for example dialysis centres, or for transporting patients to be transferred from one hospital complex to another so that said passengers can undergo specific tests or other procedures, in which the people to be transported have a high level of autonomy and do not require treatment by medical professionals during the journey - for safety and strict control reasons an ambulance is currently used, which is normally intended for the transport and care of people who require urgent treatment, or who are in a critical condition, or people who in any case are not self-sufficient.

Said ambulances for transporting passengers almost always contain only a stretcher, meaning that the passenger must remain lying down.

To overcome this, sometimes, several people requiring care are allowed to get into the ambulance, but they do not have specific and comfortable places available to them for transportation, making the journey uncomfortable and involving the risk of falls if there are sudden movements by the vehicle.

In practice, such transporting of these types of people who are not in emergency or critical condition is too expensive, allowing only a limited number of passengers to be transported in conditions that are not optimum.

In particular, for these people who are not in a critical or emergency condition, it is too uncomfortable and tiresome having to remain lying down on the stretcher during the journey.

The people to be transported, not in a critical or emergency condition, are in any case people who do not enjoy perfect health and should preferably be closely monitored so that they can rapidly be provided with care. The prior art vans for transporting people do not allow efficient monitoring, or care, of the passenger transported, should circumstances make such care necessary.

There are also vans with fixed seats for transporting passengers, although these are not suitable for transporting people who will undergo medical care, since they do not meet the necessary technical and minimum care requirements, should care be needed.

Another problem arises when people who will undergo treatment and who use a wheelchair or the like have to be transported. In fact, the areas inside ambulances and normal vans are not optimised for transporting such people, meaning that the people who will undergo treatment and the personnel assigned to them experience discomfort and difficulties.

According to the invention, a vehicle is provided, in particular a motor vehicle, especially of the medical type, specifically for transporting passengers who will undergo non-urgent medical treatment such as a periodic therapy, a diagnostic test or other procedure, the vehicle comprising a supporting framework, a covering body delimiting a driving place and a compartment for one or more passengers, each in a respective place; characterised in that in the passenger compartment there are means for activating an emergency signal, as claimed in claim 1. In this way, people who will undergo treatment, care or other procedures can be suitably transported and, if necessary, action can rapidly be taken to help these people in the event of a medical emergency.

Preferably, it is possible to vary the configuration of the present vehicle as desired and, therefore, suitably transport the people who will undergo treatment or care or other procedures.

These and other features of the invention are clearly described in the claims below and its advantages are more apparent from the detailed description which follows, with reference to the accompanying drawings which illustrate a preferred embodiment of the invention provided merely by way of example without restricting the scope of the inventive concept, and in which:
- Figure 1 is a schematic top plan view of a preferred embodiment of a vehicle for transporting passengers who will undergo care in accordance with the present invention, in a first configuration for use;
- Figure 2 is a perspective schematic top view of the rear compartment of the preferred embodiment of the vehicle in accordance with the present invention, with an exploded view of the bottom of the passenger compartment;
- Figure 3 is a perspective schematic bottom view of the rear compartment of the preferred embodiment of the vehicle in accordance with the present invention, with an exploded view of the bottom of the passenger compartment;
- Figure 4 is a schematic top plan view of the preferred embodiment of the vehicle for transporting passengers who will undergo care, showing in particular the circuit for emitting an emergency signal;
- Figure 5 is a front view of a panel on which the push-button for activating an emergency signal is mounted;
- Figure 6 is a schematic top plan view of the preferred embodiment of the vehicle for transporting passengers who will undergo care, showing the viewing circuit;
- Figure 7 is a schematic top plan view of the preferred embodiment of the vehicle for transporting passengers who will undergo care, showing operation of the circuit for viewing the inside of the vehicle;
- Figure 8 is a schematic top plan view of the preferred embodiment of the vehicle for transporting passengers who will undergo care, showing operation of the circuit for viewing the area behind the vehicle;
- Figure 9 is a top plan view of the preferred embodiment of a vehicle in a second configuration for use;
- Figure 10 is a top plan view of the preferred embodiment of a vehicle in a third configuration for use;

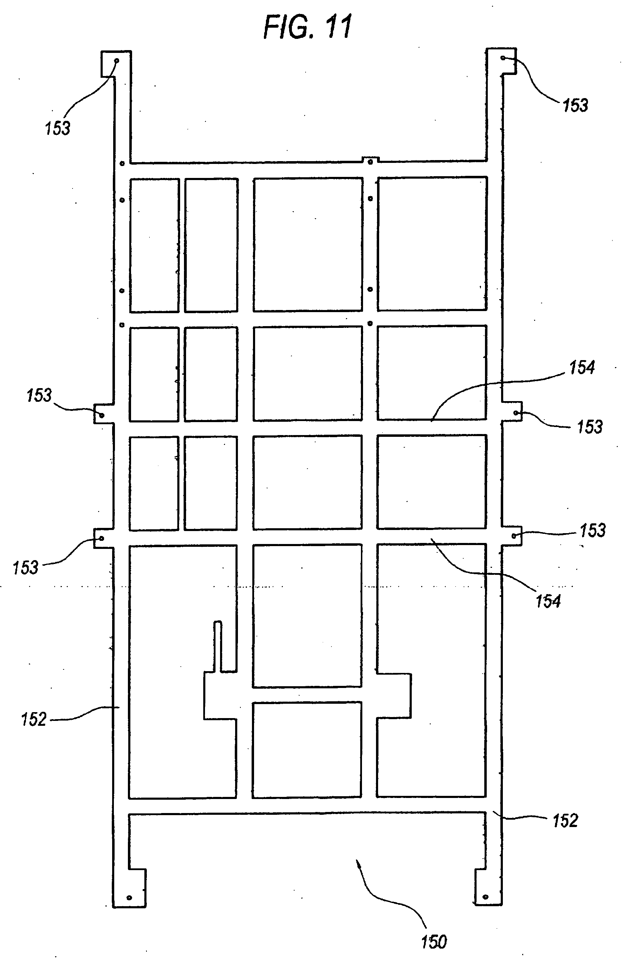

- Figure 11 is a top plan view of the supporting frame of the bottom of the passenger compartment;
- Figure 12 is a perspective view from the rear of a second preferred embodiment of the vehicle in accordance with the present invention, in particular showing the loading platform in a first operating condition;
- Figure 13 is a perspective view from the rear of the second preferred embodiment of the vehicle in accordance with the present invention, in particular showing the loading platform in another operating condition;
- Figure 14 is a top plan view of a third preferred embodiment of the vehicle in accordance with the present invention;
- Figure 15 is a perspective side view showing the side door, in particular illustrating the storage unit at the vehicle driver's cab in the third preferred embodiment of the vehicle in accordance with the present invention;
- Figure 16 is a longitudinal section of only the storage unit at the vehicle driver's cab in the third preferred embodiment of the vehicle in accordance with the present invention;
- Figure 17 is an elevation view of only the storage unit, as seen from the passenger compartment, at the vehicle driver's cab in the third preferred embodiment of the vehicle in accordance with the present invention.

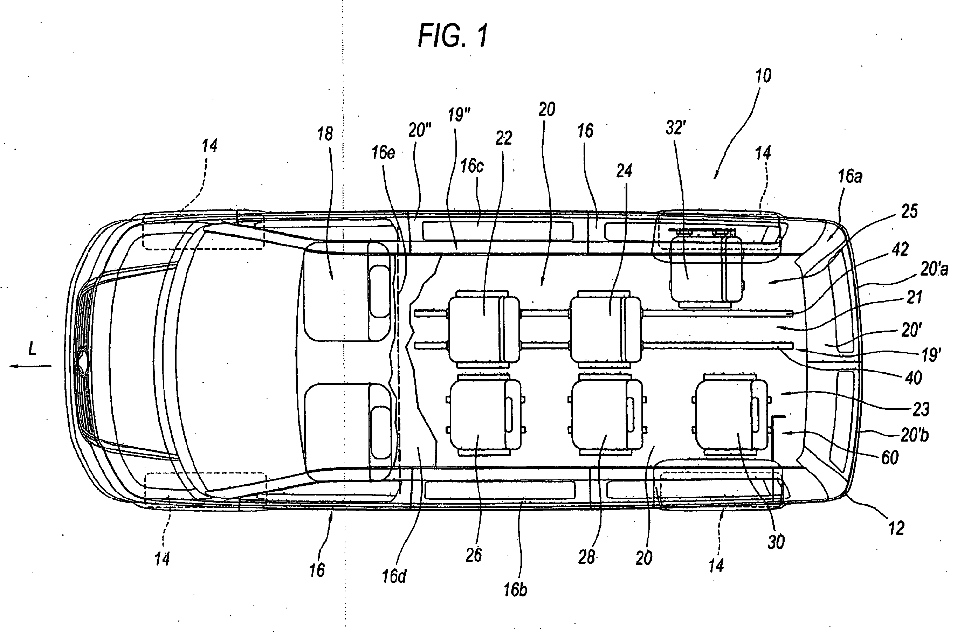

Figure 1 shows a preferred embodiment 10 of a vehicle, in particular a motor-vehicle, especially of the medical type, specifically for transporting passengers who will undergo non-urgent medical treatment, such as a periodic therapy or a diagnostic test or other procedure.

The vehicle comprises a supporting framework 12, resting on corresponding wheels 14, and a covering body 16, delimiting a front driving place or zone 18, and a rear compartment or zone 20 for the passengers to be transported to a treatment centre, each in a respective place, as described in more detail below.

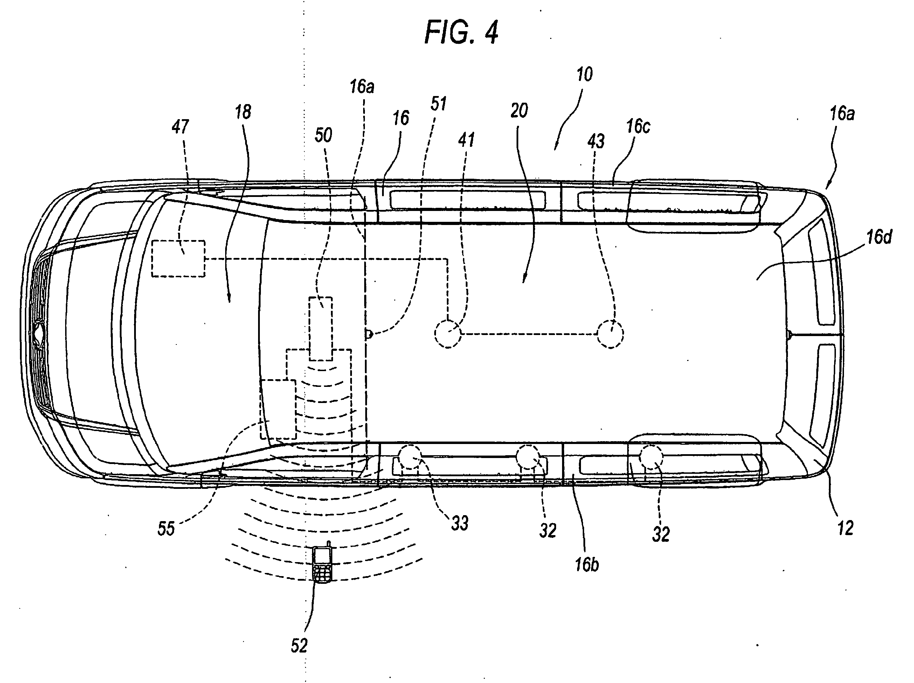

As illustrated, the body 16 has a rear wall 16a, lateral walls 16b,16c, an upper surface 16d, better or more fully illustrated in Figure 4, delimiting the passenger compartment 20, the bottom of said compartment 20 being delimited by a supporting base or surface 21' and the passenger compartment being separated from the driving place by a vertical and transversal or partition wall, labelled 16e in the accompanying drawings and schematically illustrated with a dashed line. However, alternatively, said transversal and vertical partition wall 16e may not be present.

In practice, as illustrated, the passenger compartment 20 extends from the driving place 18 to the rear wall 16a and between the lateral walls 16b, 16c.

In conformity with the preferred embodiment illustrated, a first and a second door 20', 20" also open in the body 16, respectively at the rear wall 16a and a lateral wall 16c of the containment body. The doors allow access to the passenger compartment 20, through respective openings 19' and 19" in the body.

In practice, the side door 20" preferably consists of a single door, preferably sliding, whilst the rear door 20' has a pair of opposite doors 20'a, 20'b, turning relative to hinges substantially fixed at the respective lateral wall 16b, 16c.

As illustrated, advantageously, there is a plurality of places, which are labelled 22, 24, 26, 28, 30 and 32', for passengers, as described in more detail below and also with reference to the drawings.

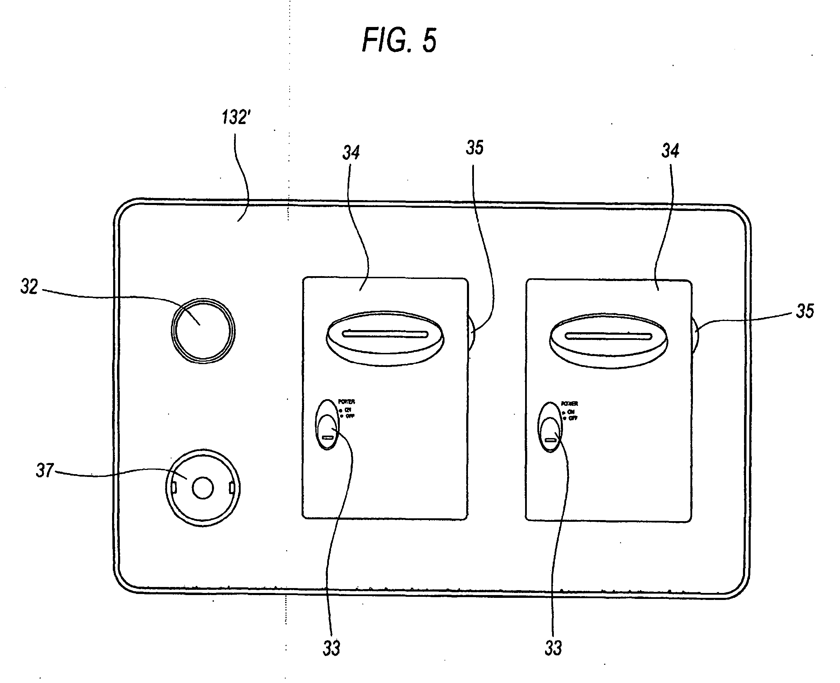

Advantageously, in the passenger compartment 20 there are also means 32 for activating an emergency signal, as illustrated in Figures 4 and 5. More advantageously, said means are provided at or close to the respective passenger place.

In this way, the passenger can independently activate an emergency signal, the means being operated relatively easily. The passenger can simply remain seated and extend an arm to reach the activation means with his hand.

Advantageously, the activation means 32 are supported on a lateral wall 16b delimiting the compartment 20 close to or at a respective passenger place 26, 28, 30, as may be inferred from Figures 1 and 4.

In particular, there are means for transmitting the signal generated by the activation means, in the form of an electrical cable, which, advantageously, extends along the lateral wall 16b of the compartment. However, it shall be understood that the activation signal could be transmitted in any other suitable way.

For this purpose, at the lateral wall there may be a plurality of panels 132', which, as Figure 5 shows, have a push-button 32 for activating an alarm signal and corresponding audio listening means comprising a first and a second socket 33, 33 and adjusting means 35, 35.

To avoid disturbing other passengers and the driver, these means for emitting an entertainment signal are therefore equipped with an earphone, allowing only the person using the earphone to listen to a radio station or the like.

In practice, for these audio means the panel is designed to serve a pair of passenger places which are located next to each other. The numeral 37 denotes a socket for a low voltage electricity supply provided on the same panel 132'.

To make it easier for passengers in other places to reach the push-button 32, additional panels 132' could be used, for example installed on the upper surface 16d and pointing downwards.

Advantageously, the passenger places also comprise a first longitudinal row of places, in a substantially central or transversally intermediate position in the passenger compartment 20. Said first longitudinal row of places is labelled 21 in the drawing.

Advantageously, the central row of places comprises at least one, in particular a first and a second, place, longitudinally aligned with each other, and, in accordance with the first embodiment illustrated, consisting of a first and a second seat 22, 24.

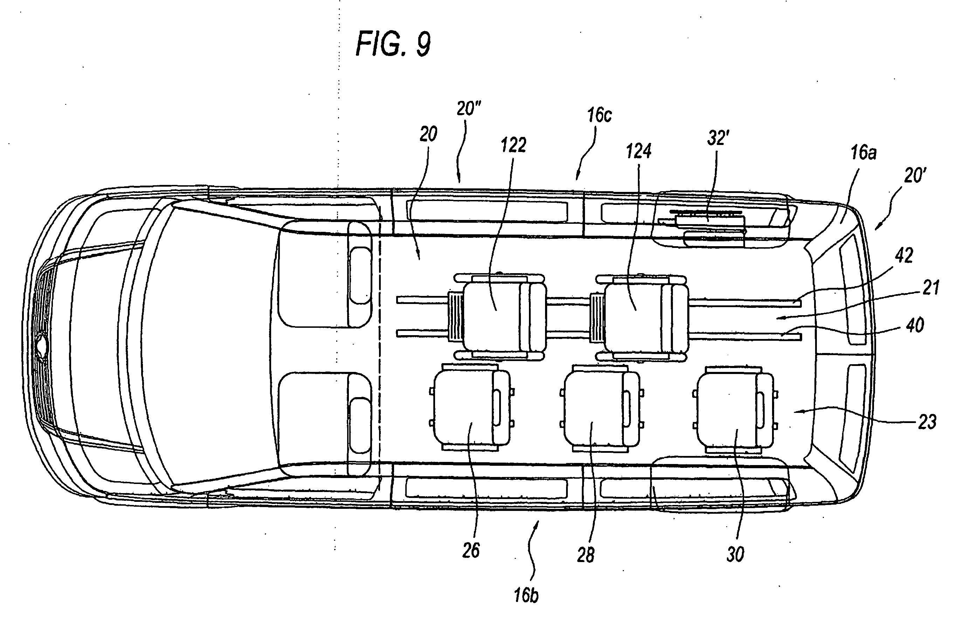

As may be inferred from Figure 9 which shows a second preferred configuration for the places in the passenger compartment, in contrast said central longitudinal row 21 of places comprises a first and a second wheelchair 122 and 124 longitudinally aligned with each other.

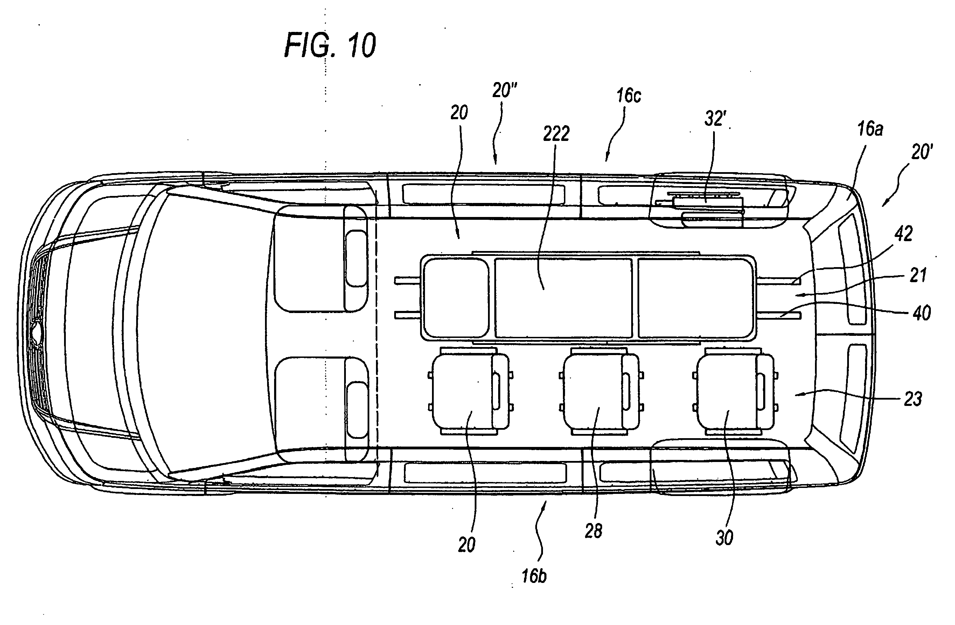

According to another possibility, illustrated in Figure 10, the central longitudinal row 21 of places comprises a stretcher 222.

In particular, it is a folding stretcher which can be positioned, when folded, in the compartment 18, and can be opened out only when needed, that is to say if one of the passengers, who are people requiring care, needs a more comfortable position for their journey or one suited to their specific physical conditions at the time.

Advantageously, the places 22 and 24 of the central longitudinal row of places 21 are removably connected, that is to say retained or anchored, in such a way that they can engage with and disengage from the vehicle 10. In particular, they are removably connected to the supporting bottom or bed 21' of the passenger compartment and can also be put in a plurality of longitudinal positions, which can be selected as appropriate.

In practice, in the passenger compartment 20 there are retaining or anchoring means 40, 42 which can be engaged and disengaged, described in more detail below, for at least one passenger place, said retaining means that can be engaged and disengaged being located at the supporting bed of the passenger compartment 20, remaining fixed relative to the surface 21'.

In particular, the retaining means, which can engage and disengage, comprise a plurality of connecting or engagement points, for a respective passenger place, which are distributed or spaced out.

In practice, these form retaining means, which can be engaged and disengaged, forming a plurality of engagement points suitably distributed or spaced out, to which a respective passenger place can be connected, this passenger place being put in any desired and suitable position according to the requirements on each occasion, in the passenger compartment 20.

In this way, as may be inferred from Figures 1, 9 and 10, for specific and different transportation configurations for the present vehicle, the vehicle may be easily and rapidly adapted to suit the specific requirements each time.

Therefore, in this way it is possible to suitably transport people who will undergo treatment or care or other procedures.

Moreover, the places of the longitudinal row of places 21 can be angled in a preferred direction, for example, they may be angled in such a way that the seated passenger is looking in the direction in which the vehicle is travelling, or they may face the opposite direction to that of vehicle travel so that the passenger is looking towards the back of the vehicle. For this purpose, it would also be possible for example to position the front seat 22 facing backwards and the rear seat 24 facing forwards. However, said arrangement is not illustrated in detail in the accompanying drawings. In practice, in the present vehicle at least one of the places can be angled in a predetermined direction, either facing forwards or facing backwards.

There is also the possibility of using passenger places consisting of a fully reclining seat, so that the backrest can be substantially horizontal, that is to say, so that it provides a supporting surface consisting of the part of the seat the passenger sits on and the backrest, forming a single substantially horizontal surface configuration.

In practice, this makes it possible to obtain places which can be transformed from places suitable for keeping the passenger in a sitting condition to places suitable for supporting a passenger who is lying down, or suitably reclining, by partly rotating the backrest relative to the part of the seat the passenger sits on. Again, these configurations with a reclining backrest are not illustrated in detail in the accompanying drawings and can be obtained using seats of the known type.

As shown in Figure 9, advantageously, in the positions normally occupied by the seats 22 and 24, it is possible to put wheelchairs 122, 124, which can be suitably fixed to the vehicle 10, or a stretcher 222, of the folding type, which when folded is stored on one side of the compartment 20. There are also places preferably connected to the vehicle in a fixed fashion, in particular seats 26, 28, 30, forming a first, a second and a third place in a lateral longitudinal row of places 23, extending immediately next to the longitudinal wall 16b of the body forming the passenger compartment 20 and at the side of or longitudinally alongside the central longitudinal row of places 21.

As illustrated, a first and a second place 26, 28 in this longitudinal row 23 are practically aligned with each other, whilst another, third place 30 projects slightly towards the centre of the compartment 18, allowing it to be positioned next to the zone in which the vehicle rear wheel 14 is located.

In particular, as illustrated, the first lateral and longitudinal row of places 23 is at the wall 16b, which is opposite the wall 16c, in which the lateral opening 19" allowing access to the passenger compartment 20 is made.

However, it shall be understood that this first lateral row of places 23 could consist of any suitable number of places, for example even a single place.

However, similarly, it shall be understood that the central row 21 and the second lateral row of places 25, described below, may also consist of any suitable number of places.

Also, advantageously, there is a second lateral longitudinal row of places 25, located next to the central row of places 21, at the opposite lateral wall 16c of the vehicle, consisting of a single folding seat, labelled 32' in the accompanying drawings.

In particular, said folding seat 32', illustrated in Figure 1, is lowered in the configuration for use, whilst it is raised in the fold-away position, in Figures 9 and 10, allowing easy positioning of wheelchairs and the stretcher.

As illustrated, the folding seat 32' is positioned at the vehicle rear wheel and is held in the raised condition in which it is not used if for example wheelchairs or the stretcher are used, as illustrated in Figures 9 and 10, since the latter take up the space in front of the seat 32' in the central and rear zone of the compartment 20.

Therefore, as illustrated, the second lateral row of places 25 comprises a single place, having a configuration which varies, either down for use or folded-away for storage.

In practice, passenger place means are used which are of the folding seat type, in particular folding or rotating according to an axis whose direction is the same as the longitudinal direction "L" of the vehicle, illustrated by the corresponding arrow in Figure 1.

Advantageously, there are also retaining means 40, 42 for at least one place, extending in a predetermined direction, in particular in the longitudinal direction, forming anchoring means which can be engaged and disengaged.

Moreover, advantageously, the retaining means 40, 42 form a plurality of positions for use for the passenger place.

In particular, the retaining means 40, 42 form a plurality of points for the connection or engagement of a respective passenger place, said points distributed or spaced out longitudinally.

In practice, the rods 40, 42 form a plurality of engagement points which are longitudinally distributed or spaced out, to which a respective place can be connected, so that this place is put in any desired and suitable longitudinal position according to the requirements each time.

As illustrated, the retaining means comprise a first and a second engagement rod or track 40, 42, extending parallel with each other in the vehicle longitudinal direction. However, it would also be possible to use only a single, suitably positioned retaining track.

There are also means for engaging and locking the respective place to the retaining means 40, 42. Said engaging and locking means connect the respective place to the first and second rod 40 and 42, but are not illustrated in detail in the accompanying drawings and may be made in any suitable way available to experts in the field. For example, it is possible to use locking means which can be rapidly activated and deactivated, for example by operating a lever which activates and deactivates the connection, preferably with the retaining means 40, 42. Obviously, the locking means comprise respective means for engaging with the retaining means and the engagement means of the respective place, or the place supporting frame.

As illustrated, the length of the retaining means 40, 42 is such that it allows the aligned engagement of at least a first and a second wheelchair.

Advantageously, the length of the extended retaining means 40, 42 could be such that it allows the aligned engagement of a stretcher and at least one other place for a sitting passenger, preferably a length which allows the aligned engagement of a stretcher and at least a first and a second sitting place for the corresponding passenger.

In practice, as illustrated, the means for retaining with engagement and disengagement 40, 42 extend substantially along the whole length of the passenger compartment 20.

As already indicated, at each or some of the passenger places there are means 34 which can be suitably selected by the user to emit an audiovisual signal or, as illustrated here, an audio signal. For this purpose, the emitter means comprise, as indicated, a respective radio set 34 having selection means 35 and means for the connection of earphones 33.

According to another advantageous aspect, there may also be means for supplying oxygen to the passenger.

Said means for supplying oxygen to the passenger, not illustrated in detail in the accompanying drawings, have a respective end or mask for use by the passenger, which can be positioned at a plurality of places.

In practice, as it is schematically illustrated in Figure 4, there is a first and a second outlet 41, 43 in the upper surface 16d, from which ducts descend, having oxygen masks at the ends.

As illustrated, said first and second outlets 41 and 43 are suitably spaced out in the compartment 20 longitudinal direction, being at the front zone and at the substantially central zone of the compartment 20.

In practice, the oxygen supply means comprise a respective oxygen supply unit 47, connected to oxygen masks by ducts, schematically illustrated in Figure 4 and exiting the outlets 41 and 43 with a corresponding portion, not illustrated, coming out of the vehicle upper surface 16d covering and extending downwards so that the passengers can put on the masks. The length of said portion of the oxygen supply means projecting from the outlets 41 and 43, is such that it can reach a plurality of passenger places.

The oxygen supply unit 47 is preferably located in a compartment or storage unit above the driver's cab, described in more detail below.

Moreover, as illustrated, in particular in Figure 4, the push-button 32 for sending an alarm signal closes a circuit connected to a control unit for transmitting messages or signals which is described in more detail below.

The vehicle comprises means, or a control unit, for managing information.

In particular, the means for managing information comprise means 50 for receiving and transmitting signals containing corresponding information, which are integral with the vehicle, and movable means 52 for receiving and transmitting said signals containing the information.

The movable means 52 preferably consist of a mobile phone, usually connected to a corresponding holder on the vehicle and which may, advantageously, be removed from its holder and used by the operator when the latter moves away from the motor vehicle. This allows him to remain in contact with the vehicle and/or with any other remote control units or stations with which the vehicle is linked.

In practice, the fixed unit 50 comprises a CPU or processor, a memory and corresponding input and output means, as well as means for transmitting and receiving remote signals.

In turn, the movable unit 52 comprises a CPU, a memory, input and output means, connected to the CPU, and corresponding means for transmitting and receiving signals, in particular signals in the form of Hertzian waves.

Moreover, the fixed unit 50 has power supply means 55, whilst the movable unit 52 has a rechargeable battery, in particular rechargeable when the movable unit 52 is placed in its holder in the motor vehicle.

Advantageously, the means 50 for managing information are designed to receive an emergency signal from the activating means 32 and to give the command for the automatic emission of an emergency message. Said emergency message is preferably contained in a signal which is transmitted by the fixed means 50 to the movable means 52.

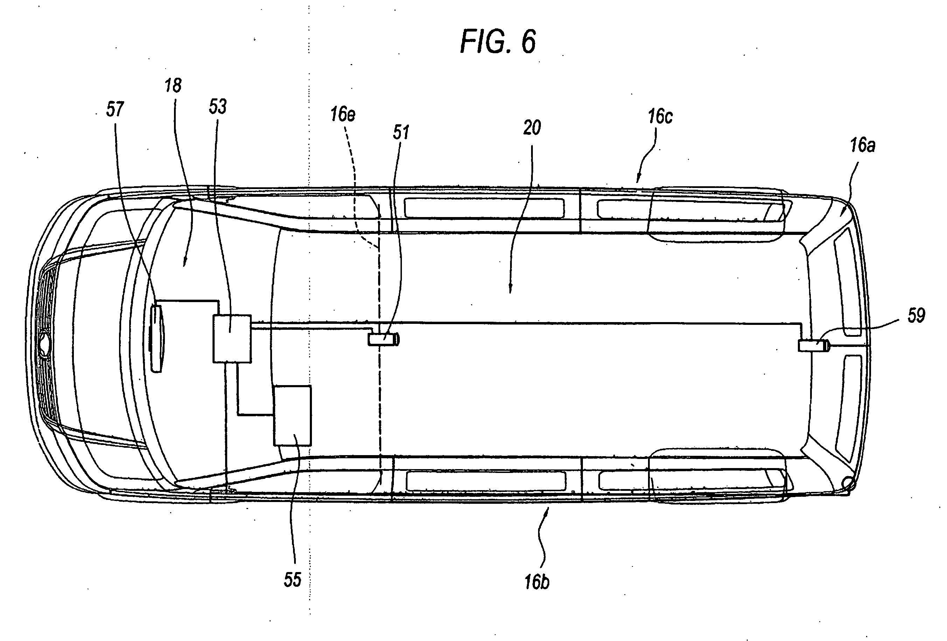

Moreover, as illustrated in Figure 6, advantageously there are also means for viewing the passenger, consisting of at least one camera 51, suitably positioned to provide coverage of the rear compartment 20.

Advantageously, the camera 51 is positioned at the partition wall 16e, that is to say, behind the driver's cab 18, and facing the passenger compartment 20.

The signal detected by the camera 51 is then transmitted by centralised means 53 for managing information to display means 57, in the driver's cab 18. In this way, the operator can monitor the situation in the passenger compartment without having to turn around.

The centralised means for managing information are also supplied with electricity by the battery 55.

There could also be another camera 59, positioned at the rear of the vehicle, which is activated if reverse gear is selected and whose visual signal is processed by the centralised means 53 for managing information and displayed at the driving place, on the display 57 close to the vehicle driving place.

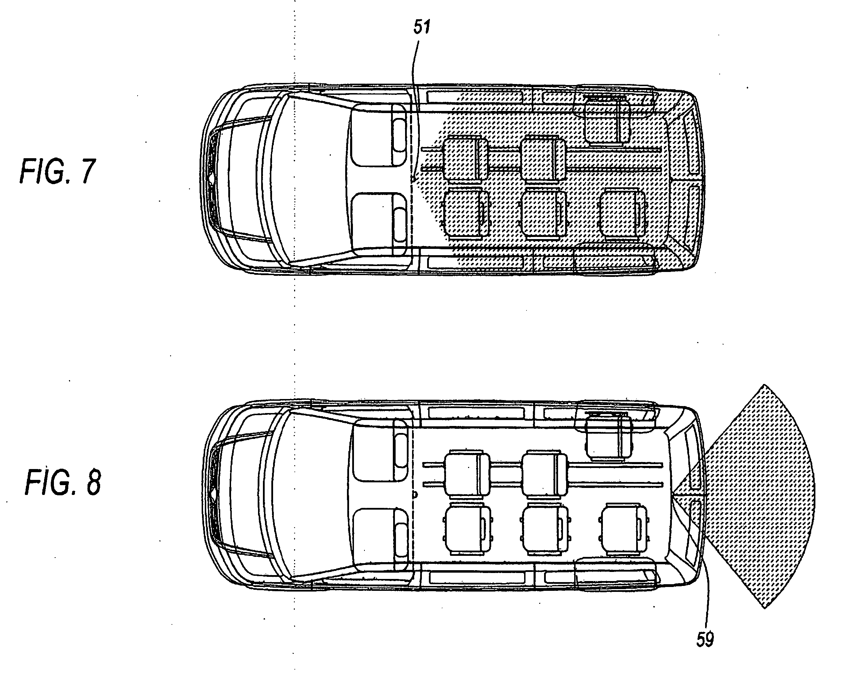

The advantageous fields of vision, or ranges, of the cameras 51 and 59 are shown in Figures 7 and 8. The centralised means 53 for managing information are also able to suitably communicate, or exchange information, with a remote operations control unit, for example through the means for transmitting a remote signal 50, and if necessary can control a printer, not illustrated, so that it prints a document, for example an accounting document such as a receipt for the service provided.

According to another aspect, the emergency signal activated using the means 32 is also transmitted to emitter means, in particular light emitter means at the driving place 18, which allow the person in the driving place to immediately be alerted to the emergency situation.

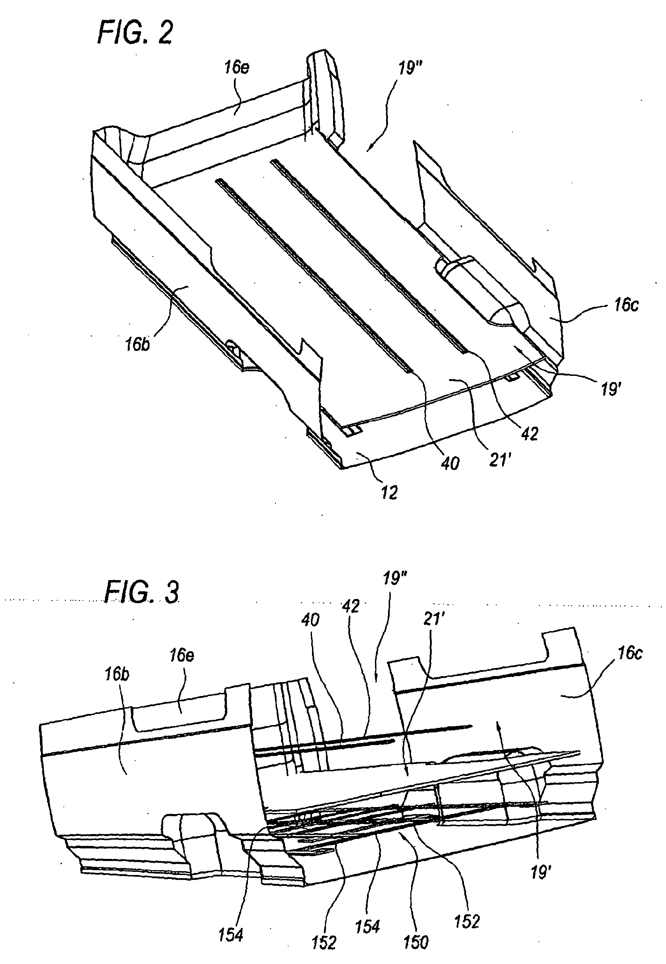

Advantageously, as illustrated in Figures 2 and 3, the vehicle has a supporting frame 150 for the treadable surface of the compartment 20, which is connected to and supported by the vehicle framework. In particular, it is directly connected to the vehicle framework 12 at predetermined points for coupling seats conventionally used in the motor vehicle.

In practice, a motor vehicle having a known construction is used, which is usually equipped with seats that are directly connected to the vehicle framework and at suitable predetermined anchor points.

Advantageously, the means 40, 42 for retaining the places 22, 24, 122, 124, 222 are connected directly to the supporting frame 150, and the fixed places 26, 28, 30 are directly connected to the supporting frame 150.

Said supporting frame 150 supports a horizontal plate 21' resting on top of it, forming the treadable bottom or bed of the passenger compartment 20.

In more detail, the supporting frame 150 comprises a plurality of longitudinal members and a plurality of cross-members, respectively labelled 152 and 154 in the accompanying drawings.

The numeral 153 denotes the points where the supporting frame, or lattice, 150 is connected to the vehicle framework 12.

As illustrated, in each longitudinal row 21, 23 of places, the places are spaced out longitudinally. This allows easy movement and access to the places for the people transported.

In practice, as illustrated, there are two or more longitudinal rows of places, where the places of each row can be arranged relative to the transversally adjacent places of the corresponding row in such a way as to promote easy movement for the people towards and from the specific place.

Moreover, as illustrated, the rows of places and in particular the lateral rows 23 and 25 are suitably spaced out transversally.

Moreover, each place has means, or a frame, for connecting to the vehicle, which are independent of or separate from the frames of the other places, also being advantageous in that this allows the vehicle configuration to be changed according to the specific transport requirements.

There are also advantageous means for storing equipment, in particular medical or service equipment, and/or for material, in particular medical or service material.

In particular, as illustrated in Figure 1, in the rear zone of the compartment 20, in particular in the position behind the first lateral row 23 of places, there is a storage unit, or compartment 60, which may be designed to hold a rucksack suitable for containing first aid instruments and medicines. Advantageously, said compartment 60 is positioned transversally next to the zone from which a wheelchair lifting and loading platform extends, at the rear wall 16a of the vehicle. When used, the platform can be positioned outside the vehicle through the rear opening 19', with the door 20' open. The loading platform is not illustrated in detail in the accompanying drawings relative to this first preferred embodiment.

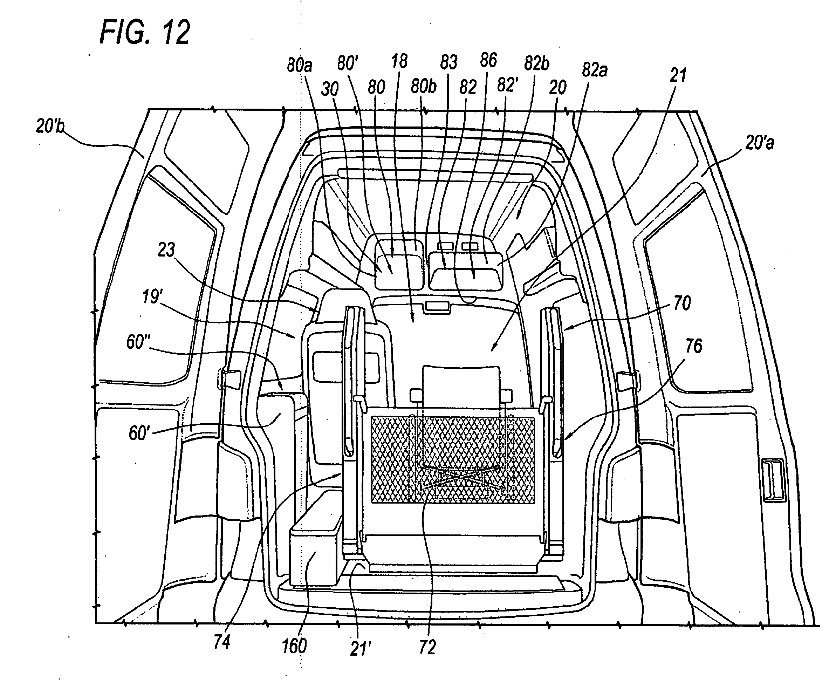

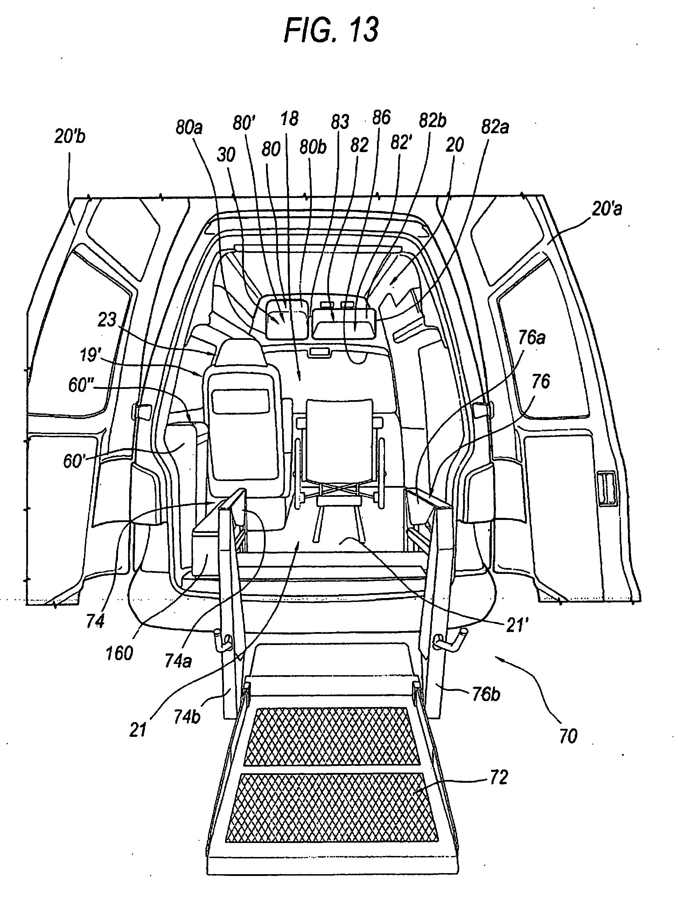

A second preferred embodiment of the vehicle is illustrated in Figures 12 and 13, in which the components similar to those of the previous embodiment are labelled with the same reference characters and, for brevity and convenience, will not be described again in detail.

This second preferred embodiment of the vehicle differs from the first preferred embodiment substantially in that, as illustrated in Figures 12 and 13, in place of the compartment or storage unit 60 there is a storage unit for an oxygen container, said storage unit consisting of a body, preferably made of plastic, having a chamber for holding the container and an upper opening 60" for inserting the container in it.

In practice, the storage unit body 60' is a substantially cylindrical body extending vertically and fixed to the body of the vehicle 16, remaining within the passenger compartment 20 and at the rear part 16a of the vehicle.

As illustrated, the storage unit or body 60', like the storage unit 60 of the first preferred embodiment, is at one side 16b of the vehicle and close to the rear door 20' of the vehicle.

Another storage unit 160, consisting of an extended box-shaped body, extends longitudinally on the surface 21' at the first lateral row 23 of places.

Said storage unit 160 is positioned transversally between the storage unit 60' for the oxygen supply means and the loading platform 70, and allows a folded stretcher to be stored in the passenger compartment, at the rear part of the vehicle, without being too much of a hindrance.

As it is expressly shown, the loading platform 70 comprises a supporting surface 72 and lateral supporting arms 74, 76, having a part 74a, 76a fixed to the vehicle and at the rear part of the vehicle bed, and a part 74b, 76b, which can move relative to the respective fixed part 74a, 76a, which supports the supporting plate or surface 72.

As illustrated, the loading platform 70 is opposite the respective door, in particular opposite the rear door 20' of the vehicle.

As illustrated, there are also storage means 80, 82 for equipment or materials, extending above the driver's cab 18.

In particular, these storage means comprise a first and a second compartment 80, 82, transversally arranged side-by-side and separated by a partition 83.

As illustrated, these storage means 80, 82, extending above the driver's cab 18, substantially extend across the whole width of the passenger compartment.

In particular, as illustrated, the driver's cab has an upper delimiting surface 86, forming a ceiling which is lower than the upper surface 16d of the vehicle and which forms a lower surface of the storage compartments or means 80, 82 extending above the driver's cab.

As illustrated, the storage means 80, 82 have an access opening 80', 82', which opens towards and into the passenger compartment.

The storage compartments 80, 82 also comprise a vertical lateral wall 80a, 82a, on the outside of the respective compartment, a respective upper horizontal covering wall 80b, 82b, substantially at the roof, or upper surface 16d, of the vehicle and a vertical rear wall (not shown in detail in the accompanying drawings).

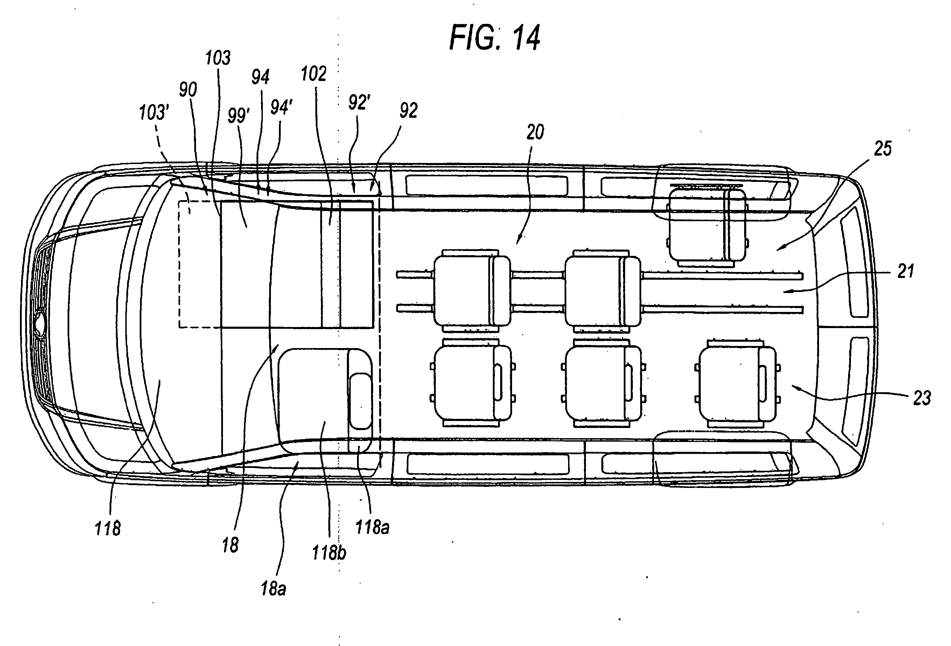

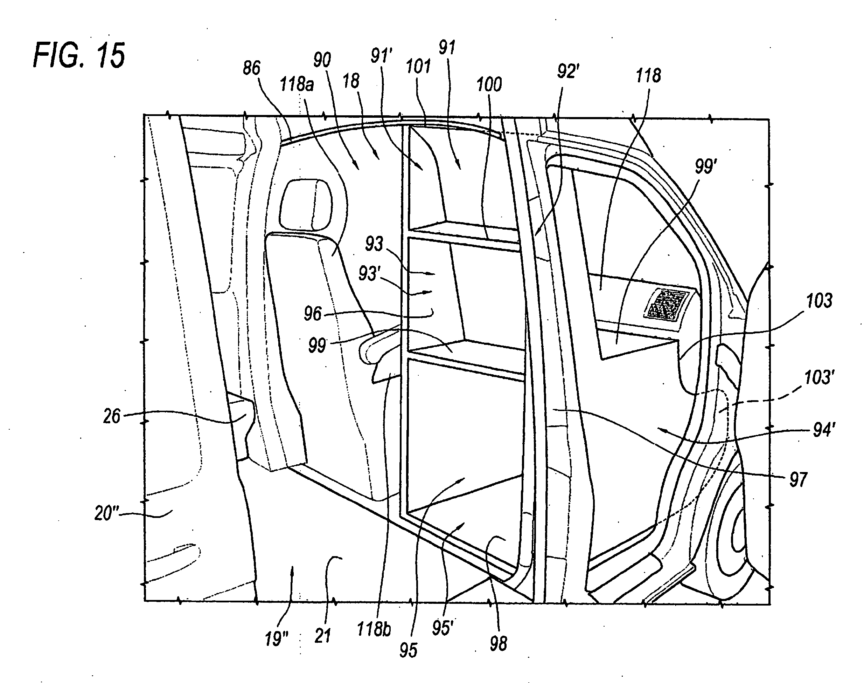

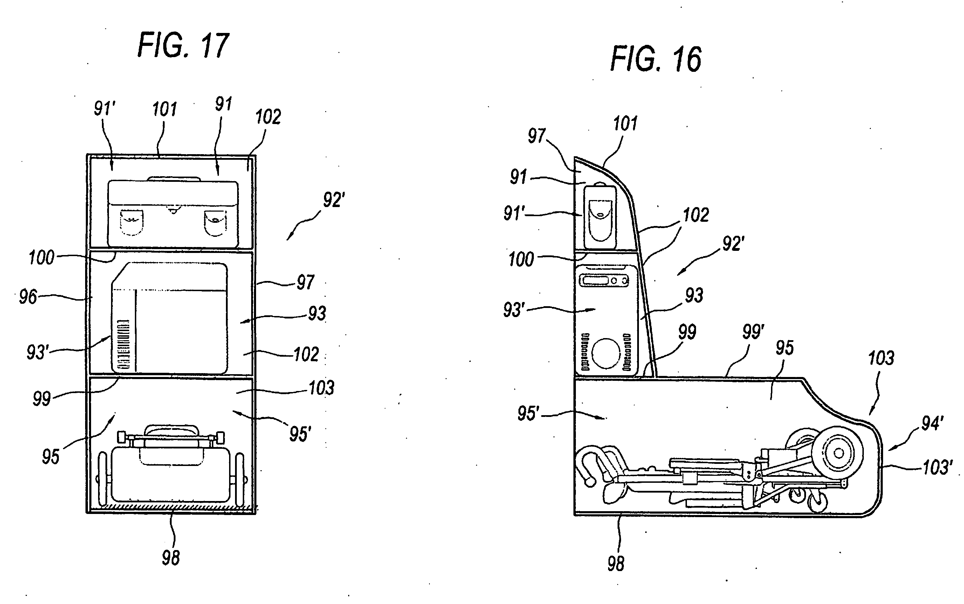

A third preferred embodiment of the vehicle is illustrated in Figures 14 to 17, in which the components similar to those of the previous embodiments are labelled with the same reference characters and, for brevity and convenience, will not be described again in detail.

This third preferred embodiment of the vehicle differs from the previous preferred embodiments only in that, as shown in Figures 14 to 17, it has storage means 90 for medical or service equipment and/or for material or other items, extending at the driver's cab 18, and in particular within the driver's cab 18, being arranged transversally next to the driving place or seat 18a.

In particular, said storage means 90 consist of a single body, or item of furniture, comprising a first part 92, extending or remaining laterally or transversally next to the driver's seat backrest 118a, and a second part 94, extending towards the front of the vehicle, longitudinally beyond the first part 92, and which is positioned laterally next to the part 118b of the driver's seat 18a on which the driver sits.

As illustrated, said storage means 90 extend substantially transversally across a distance equal to half the width of the driver's cab 18 and the passenger compartment and they are longitudinally aligned with a corresponding row of places, in particular the central row 21 of places for passengers and with the lateral second row 25 of places for passengers.

As illustrated, in elevation the storage means 90 comprise a first and a second lateral wall 96, 97, respective transversal or horizontal walls, respectively lower, middle and upper 98, 99, 100, 101 and a corresponding transversal wall 102, 103 forming the rear of the compartment.

As illustrated, the storage means 90 have a plurality of compartments 91, 93, 95, having a respective access opening 91', 93', 95' which opens towards and into the passenger compartment.

In particular, the storage means have an upper part 92' and a lower part 94' extending longitudinally beyond the upper part 92'.

In particular, the storage means 90 have, in the upper part 92', at least one storage compartment, in particular a first and a second compartment 91, 93, arranged one above the other.

As illustrated, the storage means 90 also have, in the lower part 94', a compartment 95 extending longitudinally and having a rear wall 103, which extends beyond the vertical rear wall 102 of the upper part 92' and is suitably shaped.

Advantageously, as illustrated, the storage means 90 have a lower part 94', extending at the front of the driver's cab 18, in particular at the cab dashboard, having a rear wall 103 substantially in contact with the corresponding face of the vehicle dashboard 118, and which has a longitudinal projection 103', extending below the dashboard 118. In particular, as illustrated, the upper part 92', has a rear wall 102, extending obliquely from the bottom upwards and converging relative to the front wall of the storage means 90, with the respective storage compartments 91 and 93 on top of each other, having a length or longitudinal depth which increases from top to bottom. This provides the driver with improved lateral visibility. In practice, the storage means 90 extend longitudinally next to the driving place 18a in such a way that they allow the driver a clear sideways view.

Advantageously, the storage means 90 extend laterally or transversally next to the vehicle driving place 18a.

In particular, the storage means 90 extend, in terms of height, substantially from the treadable surface 21' of the passenger compartment to the upper surface 86 of the driver's cab 18 forming the base of the storage means 80, 82.

Advantageously, the storage means extend laterally next to the driver's seat 18a backrest 118a.

Also advantageously, the storage means 94 extend next to the part 118b of the driver's seat 18a on which the driver sits.

Advantageously, the storage means 90 have a lower part 94', extending next to the driving place 18a at a height such that they allow the driver a clear view to the side of the vehicle.

The storage means 94 also extend next to the driving place 18a at a height lower than that reached by the backrest 118a of the driver's seat, the height not exceeding half the driver's seat backrest 118a.

Also advantageously, the extended storage means 95 extend next to the driving place 18a at a height greater than that of the part 118b of the driver's seat on which the driver sits.

Said storage means have a lower part 94', extending at the front part of the driver's cab, and forming a supporting surface 99' at the driver's cab 18.

In practice, the horizontal panel 99, delimiting the top of the extended compartment 95, also extends to form an upper supporting face or surface 99' for any suitable service item or equipment, or the like.

In practice, the storage compartments allow convenient storage of equipment, especially medical or service equipment, and/or material, in particular medical or service material, without taking up space that is used for the passenger places.

In particular, as illustrated, the compartment 95 can easily hold a chairlift with incorporated chair, and it could hold a folded stretcher, whilst the other compartments 91 and 93 could hold, as illustrated, a bag with a first aid kit and a refrigerator if necessary.

The compartments 80 and 82 can hold a defibrillator and other operating material or equipment in a suitable container.

This vehicle optimizes use of the storage spaces available, combining a high capacity for transporting passengers and carrying first aid or service equipment with comfortable, safe places for and spaces for movement by passengers in the compartment 20.

The invention described above is susceptible of industrial application and may be modified and adapted in several ways without thereby departing from the scope of the claims.

## Claims

1. A vehicle (10), the vehicle being a motor vehicle of the medical type specifically for transporting passengers who will undergo non-urgent medical treatment such as a periodic therapy, a diagnostic test or other procedure, the vehicle comprising a supporting framework (12), resting on corresponding wheels 14, a covering body (16) delimiting a driving place (18) and a compartment (20) for accommodating one or more passengers, each in a respective place (22, 24, 26, 28, 30, 32'); the vehicle being **characterised in that** in the passenger compartment (20) there are means (32) for activating an emergency signal, and **in that** it comprises means for managing information or signals comprising means (50, 53) for receiving and transmitting signals containing corresponding information, the means for managing information comprising movable means (52) for receiving and transmitting information signals, the means (50, 53) for managing information being designed to receive an emergency signal from the activating means (32) and to give the command for the automatic emission of an emergency message, said emergency message is contained in a signal which is transmitted by a fixed means (50), integral with the vehicle, to the movable means (52), said movable means (52) being usually connected to a corresponding holder on the vehicle and being removable from said holder to be used when the operator moves away from the motor vehicle.

2. The vehicle according to claim 1, **characterised in that** it comprises, in the passenger compartiment (20), retaining or anchoring means (40, 42) which can be engaged and disengaged for at least one passenger place.

3. The vehicle according to claim 2, **characterised in that** the retaining means which can be engaged and disengaged are at the supporting bed of the passenger compartment (20).

4. The vehicle according to either of the foregoing claims 2 and 3, **characterised in that** the retaining means which can be engaged and disengaged comprise a plurality of points for engaging a respective place, said points being distributed or spaced out within the passenger compartment (20).

5. The vehicle according to any of the foregoing claims, **characterised in that** the passenger places comprise a row of places (21) in a substantially central position in the passenger compartment (20).

6. The vehicle according to any of the foregoing claims, **characterised in that** the passenger places comprise a lateral row of places (23) close to a lateral wall of the compartment (20).

7. The vehicle according to claim 6, **characterised in that** the passenger places comprise a second lateral row of places (25) on the opposite side to the first lateral row of places.

8. The vehicle according to any of the foregoing claims 1, **characterised in that** it comprises a plurality of places (22, 24, 26, 28, 30, 32') for a respective passenger.

9. The vehicle according to any of the foregoing claims 1, **characterised in that** the means (32) for activating an emergency signal are located at a respective passenger place (22, 24, 26, 28, 30, 32').

10. The vehicle according to any of the foregoing claims, **characterised in that** it comprises means for viewing the passenger.

11. The vehicle according to any of the foregoing claims, **characterised in that** it comprises means for supplying oxygen to the passenger.

12. The vehicle according to any of the foregoing claims, **characterised in that** it comprises storage means for equipment, in particular medical or service equipment, and/or for material, in particular medical or service material.

## Patentansprüche

1. Fahrzeug (10), wobei das Fahrzeug ein Motorfahrzeug des medizinischen Typs speziell für den Transport von Passagieren ist, die sich einer nicht dringenden medizinischen Behandlung, wie einer regelmäßigen Therapie, einem Diagnosetest oder anderen Verfahren unterziehen werden, wobei das Fahrzeug ein Tragwerk (12), das auf entsprechenden Rädern (14) ruht, einen bedeckenden Körper (16), der einen Fahrplatz (18) begrenzt und einen Raum (20) zur Unterbringung eines oder mehrerer Passagiere jeweils auf einem jeweiligen Platz (22, 24, 26, 28, 30, 32') umfasst, wobei das Fahrzeug **dadurch gekennzeichnet ist, dass** sich im Passagierraum (20) Mittel (32) zur Aktivierung eines Notsignals befinden und dass es Mittel zur Verwaltung von Informationen oder Signalen umfasst, umfassend Mittel (50, 53) zum Empfangen und Senden von Signalen, enthaltend entsprechende Informationen, wobei die Mittel zur Verwaltung von Informationen bewegliche Mittel (52) zum Empfangen und Senden von Informationssignalen umfassen, wobei die Mittel (50, 53) zur Verwaltung von Informationen so gestaltet sind, dass sie ein Notsignal von den Aktivierungsmitteln (32) empfangen und den Befehl für die automatische Ausgabe einer Notrufmeldung geben, wobei die Notrufmeldung in einem Signal enthalten ist, das durch ein ortsfestes Mittel (50), das im Fahrzeug eingebaut ist, an die beweglichen Mittel (52) gesendet wird, wobei die beweglichen Mittel (52) normalerweise mit einer entsprechenden Halterung auf dem Fahrzeug verbunden und zur Benutzung aus der Halterung entfernbar sind, wenn sich der Bediener vom Motorfahrzeug entfernt.

2. Fahrzeug nach Anspruch 1, **dadurch gekennzeichnet, dass** es im Passagierraum (20) Halte- beziehungsweise Verankerungsmittel (40, 42) umfasst, die für mindestens einen Passagierplatz in und außer Eingriff gebracht werden können.

3. Fahrzeug nach Anspruch 2, **dadurch gekennzeichnet, dass** sich die Haltemittel, die in und außer Eingriff gebracht werden können, am Tragbett des Passagierraums (20) befinden.

4. Fahrzeug nach den vorangehenden Ansprüchen 2 und 3, **dadurch gekennzeichnet, dass** die Haltemittel, die in und außer Eingriff gebracht werden können, eine Vielzahl von Punkten zum Eingriff in einen jeweiligen Platz umfassen, wobei die Punkte innerhalb des Passagierraums (20) verteilt beziehungsweise beabstandet sind.

5. Fahrzeug nach einem der vorangehenden Ansprüche, **dadurch gekennzeichnet, dass** die Passagierplätze eine Reihe von Plätzen (21) in einer im Wesentlichen zentralen Position im Passagierraum (20) umfassen.

6. Fahrzeug nach einem der vorangehenden Ansprüche, **dadurch gekennzeichnet, dass** die Passagierplätze eine seitliche Reihe von Plätzen (23) in der Nähe einer Seitenwand des Passagierraums (20) umfassen.

7. Fahrzeug nach Anspruch 6, **dadurch gekennzeichnet, dass** die Passagierplätze eine zweite seitliche Reihe von Plätzen (25) auf der der ersten seitlichen Reihe von Plätzen gegenüberliegenden Seite umfasst.

8. Fahrzeug nach einem der vorangehenden Ansprüche, **dadurch gekennzeichnet, dass** es eine Vielzahl von Plätzen (22, 24, 26, 28, 30, 32') für einen jeweiligen Passagier umfasst.

9. Fahrzeug nach einem der vorangehenden Ansprüche, **dadurch gekennzeichnet, dass** sich die Mittel (32) zur Aktivierung eines Notrufsignals bei einem jeweiligen Passagierplatz (22, 24, 26, 28, 30, 32') befinden.

10. Fahrzeug nach einem der vorangehenden Ansprüche, **dadurch gekennzeichnet, dass** es Mittel zur Beobachtung des Passagiers umfasst.

11. Fahrzeug nach einem der vorangehenden Ansprüche, **dadurch gekennzeichnet, dass** es Mittel zur Versorgung des Passagiers mit Sauerstoff umfasst.

12. Fahrzeug nach einem der vorangehenden Ansprüche, **dadurch gekennzeichnet, dass** es Aufbewahrungsmittel für Geräte umfasst, insbesondere medizinische Geräte oder Versorgungsgeräte, und/oder für Material, insbesondere medizinisches Material oder Versorgungsmaterial.

## Revendications

1. Véhicule (10), le véhicule étant un véhicule motorisé du type médical, en particulier pour le transport de passagers devant subir un traitement médical non urgent comme une thérapie périodique, un test de diagnostic ou autre procédure, le véhicule comprenant un châssis de support (12), s'appuyant sur des roues correspondantes 14, un corps de couverture (16) délimitant un poste de conduite (18) et un compartiment (20) pour accueillir un ou plusieurs passagers, chacun à une place respective (22, 24, 26, 28, 30, 32') ; le véhicule **se caractérisant en ce que**, dans le compartiment des passagers (20), se trouvent des moyens (32) pour actionner un signal d'urgence, et **en ce qu'**il comprend des moyens pour gérer des informations ou des signaux intégrant des moyens (50, 53) pour recevoir et pour transmettre des signaux contenant des informations correspondantes, les moyens pour gérer des informations comprenant des moyens mobiles (52) pour recevoir et pour transmettre des signaux d'informations, les moyens (50, 53) pour gérer des informations étant conçus pour recevoir un signal d'urgence des moyens d'actionnement (32) et pour piloter la commande de l'envoi automatique d'un message d'urgence, ledit message d'urgence étant contenu dans un signal qui est transmis par un moyen fixe (50), solidaire du véhicule, au moyen mobile (52), ledit moyen mobile (52) étant habituellement connecté à un support correspondant sur le véhicule et pouvant se détacher dudit support pour être utilisé quand l'opérateur s'éloigne du véhicule motorisé.

2. Véhicule selon la revendication 1, **caractérisé en ce qu'**il comprend, dans le compartiment des passagers (20), des moyens de retenue ou d'ancrage (40, 42) qui peuvent être engagés ou désengagés pour au moins une place passager.

3. Véhicule selon la revendication 2, **caractérisé en ce que** les moyens de retenue qui peuvent être engagés et désengagés, se trouvent sur le lit de support du compartiment des passagers (20).

4. Véhicule selon l'une quelconque des revendications précédentes 2 et 3, **caractérisé en ce que** les moyens de retenue qui peuvent être engagés et désengagés, comprennent une pluralité de points pour engager une place respective, lesdits points étant distribués ou espacés à l'intérieur du compartiment des passagers (20).

5. Véhicule selon l'une quelconque des revendications précédentes, **caractérisé en ce que** les places passagers comprennent une rangée de places (21) dans une position pratiquement centrale dans le compartiment des passagers (20).

6. Véhicule selon l'une quelconque des revendications précédentes, **caractérisé en ce que** les places passagers comprennent une rangée latérale de places (23) à proximité d'une paroi latérale du compartiment (20).

7. Véhicule selon la revendication 6, **caractérisé en ce que** les places passagers comprennent une deuxième rangée latérale de places (25) sur le côté opposé à la première rangée latérale de places.

8. Véhicule selon l'une quelconque des revendications précédentes, **caractérisé en ce qu'**il comprend une pluralité de places (22, 24, 26, 28, 30, 32') pour un passager respectif.

9. Véhicule selon l'une quelconque des revendications précédentes, **caractérisé en ce que** les moyens (32) pour actionner un signal d'urgence, se trouvent à une place passager respective (22, 24, 26, 28, 30, 32').

10. Véhicule selon l'une quelconque des revendications précédentes, **caractérisé en ce qu'**il comprend des moyens pour voir le passager.

11. Véhicule selon l'une quelconque des revendications précédentes, **caractérisé en ce qu'**il comprend des moyens pour administrer de l'oxygène au passager.

12. Véhicule selon l'une quelconque des revendications précédentes, **caractérisé en ce qu'**il comprend des moyens de stockage pour équipement, en particulier équipement médical ou de service, et/ou pour matériel, en particulier matériel médical ou de service.
